# EUROPEAN PATENT SPECIFICATION

(11) **EP 1 338 126 B1**
(45) Date of publication and mention of the grant of the patent: **30.03.2005**
(21) Application number: 01999088.6
(22) Date of filing: 26.11.2001
(51) Int. Cl.: H04L 12/56

(54) **METHOD AND SYSTEM FOR RESOURCE RESERVATIONS IN A MULTICASTING NETWORK**
VERFAHREN UND SYSTEM FÜR BETRIEBSMITTELRESERVIERUNGEN IN EINEM MULTICAST-NETZWERK
PROCEDE ET SYSTEME DE RESERVATION DE RESSOURCES DANS UN RESEAU MULTI-DESTINATAIRES

(30) Priority: 30.11.2000 EP 00126227
(43) Date of publication of application: 27.08.2003
(73) Proprietor: Telefonaktiebolaget LM Ericsson (publ), 164 83 Stockholm (SE)
(72) Inventor: HUNDSCHEIDT, Frank, NL-6463 BK Kerkrade (NL); HAMELEERS, Heino, NL-6471 VN Kerkrade (NL); VALENTINE, Eric, Plano, TX 75075 (US)
(74) Representative: Tonscheidt, Andreas, Dr.
(86) International application number: PCT/EP2001/013751
(87) International publication number: WO 2002/045358

(56) References cited:
- PAN P ET AL: "YESSIR: A SIMPLE RESERVATION MECHANISM FOR THE INTERNET" COMPUTER COMMUNICATIONS REVIEW,US,ASSOCIATION FOR COMPUTING MACHINERY. NEW YORK, vol. 29, no. 2, April 1999 (1999-04), pages 89-101, XP000829011 ISSN: 0146-4833
- WHITE P P: "RSVP AND INTEGRATED SERVICES IN THE INTERNET: A TUTORIAL" IEEE COMMUNICATIONS MAGAZINE,US,IEEE SERVICE CENTER. PISCATAWAY, N.J, vol. 35, no. 5, 1 May 1997 (1997-05-01), pages 100-106, XP000657115 ISSN: 0163-6804 cited in the application

## Description

### BACKGROUND OF THE INVENTION

### 1. Technical Field

The present invention relates to a method for improving communications between senders and receivers via a network, such as servers, routers, and clients communicating via the Internet comprising routers by extending signaling messages of a protocol used for the network and a communication system operated by the method according to the invention.

### 2. Background of the Invention

The Resource Reservation Protocol (RSVP) is specified by the Internet Engineering Task Force (IETF) and used to provide the signaling to enable network resource reservations and allocations to provide Integrated Services. In particular, RSVP enables Guaranteed Services and Controlled-Load Services. In this manner it is possible, for example, to obtain a control and guarantee of load for network resources/components, such as network domains, servers, clients, routers, and communication links. Resources are reserved or allocated for unidirectional data flows. A detailed description of the RSVP can be found in the article "RSVP and Integrated Services in the Internet: A Tutorial" by P. P. White in IEEE communications Magazine, May 1997, p. 100.

In RSVP the server sends a PATH-message to the client, containing a traffic specification (upper and lower bounds of bandwidth, delay and jitter). This message is used to store the path state in each node (e.g. router) to route Reservation-Request-(RESV)-messages in the reverse direction. On the way of the RESV-message to the client, each network checks the traffic specification and possibly filters the requirements according to the network capabilities and resource availability (admission control). The traffic specification is received by the client, upon which the client returns a RESV-message to the server to reserve the resources between the client and the server.

Since most traffic requiring reservations is delivered to groups (e.g. TV), it is natural for the client to make the request for a reservation for a flow. This has the added advantage that different clients can make heterogeneous requests for capacity from the same source.

The primary roles of the PATH-message are first to install reverse routing state in each router of the network along the communications path, and second to provide clients with information about the traffic characteristics of the sender and end-to-end (sender-client) communications path to generate appropriate reservation/allocation requests. The primary role of the RESV-message is to carry reservation/allocation requests to routers of the network along the distribution tree between clients and senders, wherein the distribution tree can also be a connection between one server and one client.

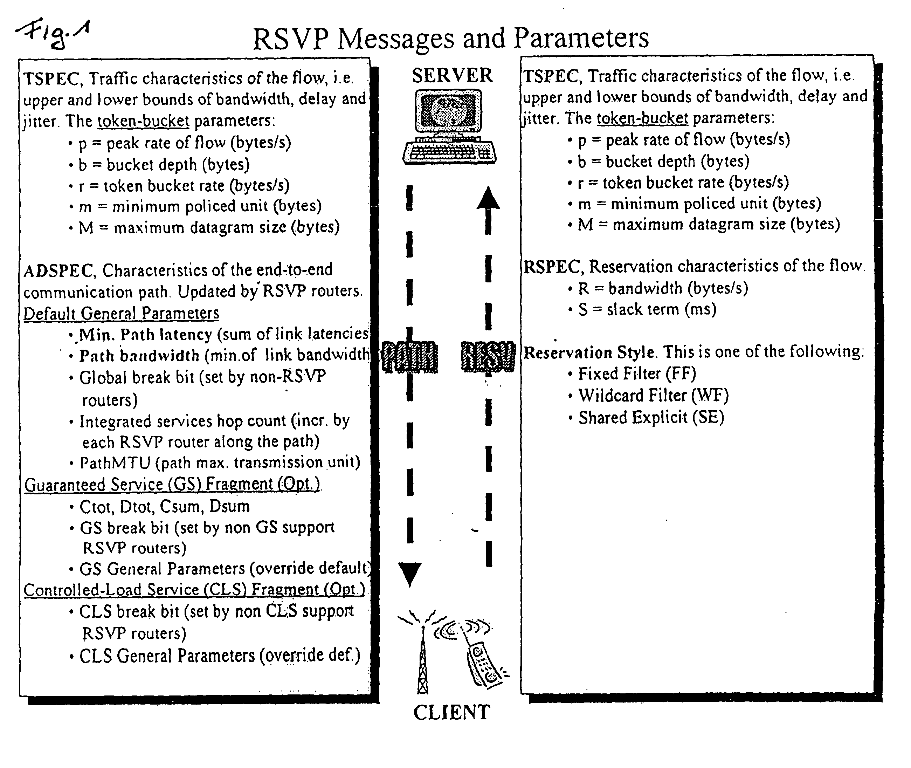

Fig. 1 provides a (simplified) overview of the RSVP signalling messages flows and the most important parameters in each of the messages.

The most relevant information in the PATH-message is the TSPEC of the sender defining the sender traffic characteristics.

The ADSPEC is an optional object that the server may include in its generated PATH-messages in order to provide the clients with the characteristics of the end-to-end communications path. This information can be used by clients to determine the level of reservation required in order to achieve their desired end-to-end QoS. The parameters included in the ADSPEC may be updated at each RSVP-capable router along the path in order to present end-to-end values to the clients. Some of the parameters are e.g. the minimum path latency, summation of individual link latencies, the path bandwidth, and the minimum of individual link bandwidths along the path.

RSVP supports both unicast and multicast sessions. The flow descriptors specify the QoS, which is used by participating entities, such as routers, server and clients. Hosts use RSVP to request a QoS level from the network on behalf of an application data stream. Routers use RSVP to deliver QoS requests to other routers along the path(s) of the data stream. RSVP is able to adapt to changes in routing.

A simplified overview of the operation of the RSVP is given in the following.

Servers characterize outgoing traffic in terms of upper and lower bounds of bandwith, delay, and jitter. RSVP sends a PATH-message from the server that contains this traffic specification (TSPEC) information to the destination address (unicast or multicast receivers). At reception of a PATH-message an RSVP capable router creates a PATH-state and stores the last hop address from the PATH-message and the TSPEC-information in the PATH-state. The last hop address is used for the routing of the RESV-message afterwards. Additionally, RSVP capable routers may update the ADSPEC-information to contain end-to-end relevant parameter values.

To make a resource reservation/allocation, clients send a RESV-(reservation request)-message upstream. In addition to the TSPEC, the RESV message includes a request specification (RSPEC) that indicates the type of integrated services required and a filter specification (FilterSPEC), that characterizes the data packets for which the reservation is being made. (e.g. the transport protocol and port number). Together, the RSPEC and FilterSPEC represent a flow-descriptor that routers use to identify each reservation.

When each RSVP router along the upstream path receives the RESV-message, it uses the admission control to authenticate the request and allocate the necessary resources. If the request cannot be satisfied (due to lack of resources or authorization failure), the router returns an error back to the client. If accepted, the router sends the RESV upstream to the next router. When the last router receives the RESV and accepts the request, it sends a confirmation message back to the client. There is an explicit tear-down process for a reservation when a sender or receiver ends an RSVP session.

### Token Bucket Metaphor

RSVP is based on the token bucket metaphor, which turns an uneven flow of packets from the user processes inside the host into an even flow of packets onto the network, smoothing out bursts and greatly reducing the chances of congestion. In this manner, a controlled load can be provided throughout the network.

Token bucket related parameters, which are to be defined for the TSPEC-information, include peak rate of flow (bytes/s), bucket depth (bytes), token bucket rate (bytes/s), minimum policed unit (bytes), and maximum datagram size (bytes).

### RSVP and Integrated Services

RSVP enables so-called Integrated Services, of which there are two fundamentally different types:

Guaranteed Services: A guaranteed service comes as close as possible to emulating a dedicated virtual circuit. It provides firm (mathematically provable) bounds on end-to-end queuing delays by combining the parameters from the various network elements in a path, in addition to ensuring bandwidth availability according to the traffic specification parameter in the PATH-message.

Controlled-Load Services: A controlled-load service is equivalent to "best effort service under unloaded conditions".

Integrated services uses a token-bucket model to characterise its input/output queuing algorithm. This is, as an example, beneficial in case of a variable bit-rate video codec. The token-bucket parameters "bucket rate", "bucket depth", and "peak rate" are part of the TSPEC- and RSPEC-information.

RSVP provides the highest level of Internet Protocol Quality of Service (IP-QoS) available. It allows an application to request QoS with a high level of granularity and with the best guarantees of service delivery possible. However, the price for this is the complexity and overhead, and thus is overkill for many applications.

### Multicasting

Multicast is the efficient transmission of an Internet Protocol (IP) datagram to a set of zero or more hosts identified by a single IP destination address.

IP multicast efficiently supports one-to-many and many-to-many transmission by enabling sources to send a single copy of a message to multiple recipients (indirectly identified by a single IP class-D multicast address) who explicitly want to receive the information. This mechanism is far more efficient than sending multiple messages to each recipient simultaneously or broadcasting the message to all nodes on the network. IP multicasting is a natural solution for multiparty conferencing because of the efficiency of the data distribution trees (spanning trees), with data being replicated in the network at appropriate points rather than in end-systems.

Multicasting is based on a series of specific protocols that "ride on top" of the existing ones to efficiently distribute data to all interested parties. With IP multicast clients do not need to know who or where the servers are to receive traffic from them. Servers never need to know who the clients are. Neither servers nor clients need to care about the network topology as the network optimizes delivery.

Multicast is a receiver-based concept. Receivers join a particular multicast session group by informing the multicast router on their subnetwork (Internet Group Management Protocol, IGMP) and traffic is delivered to all members of that group by the network infrastructure. For delivery of a multicast packet from the source (sender, server) to the destination nodes on other networks, multicast routers need to exchange the information they have gathered from the group membership of the hosts directly connected to them. There are many different algorithms and protocols to exchange this routing information, such as Distance Vector Multicast Routing Protocol (DVMRP), Multicast extension to OSPF (MOSPF), and Protocol Independent Multicast (PIM). Based on the routing information obtained through one of these protocols, whenever a multicast packet is sent out to a multicast group, multicast routers will decide whether to forward that packet to their network(s) or not. Finally, the leaf router will see if there is any member of that particular group on its physically attached networks based on the IGMP information and decides whether to forward the packet or not.

If the sender layers its data (e.g. video or audio) stream, different receivers can choose to receive different amounts of traffic and hence different qualities. To do this the sender must code the data (e.g. video data) as a base layer having the lowest quality being acceptable and a number of enhancement layers, each of which adds more quality at the expense of more bandwidth. With video, these additional layers might increase the framerate or increase the spatial resolution of the images or both. Each layer is sent to a different multicast group and receivers thereof can individually decide how many layers to subscribe to.

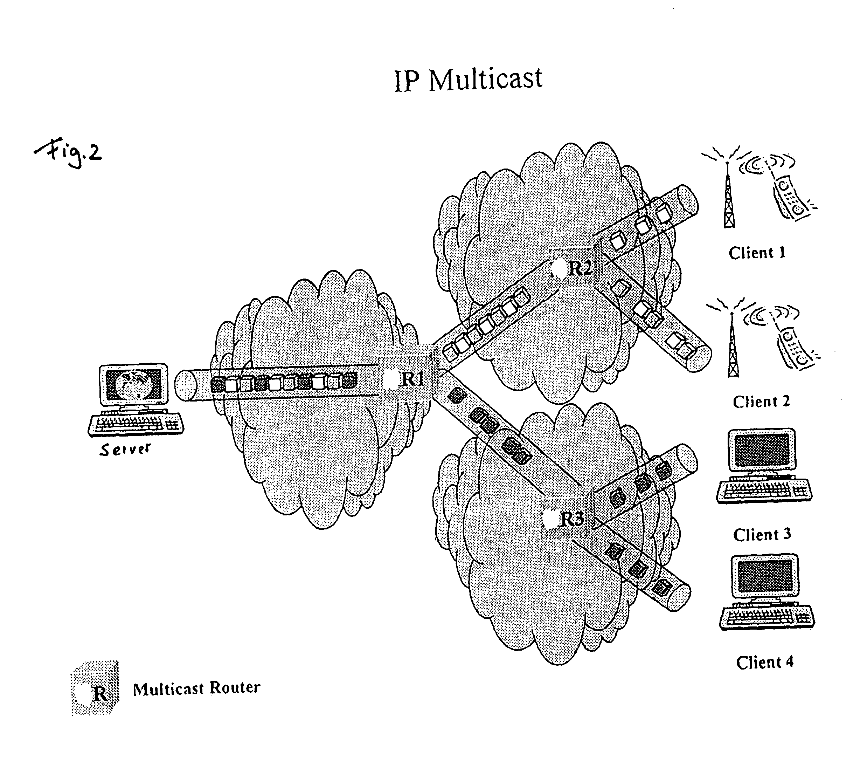

Fig. 2 shows an IP multicast scenario where a video stream is sent to four recipients (i.e. clients 1, 2, 3 and 4). Clients 1 and 2 have joined the group by informing multicast router R2 and clients 3 and 4 have done the same with multicast router R3. Client 1 receives a base layer (white packets), e.g. a code optimized for wireless environments, whereas client 2 receives this base layer and an additional layer (gray packets) for a better video quality. Clients 3 and 4 receive a different base layer (e.g. a wireline codec).

To achieve an efficient transmission, a spanning tree is constructed, that connects all members of the multicast group. Only one copy of a multicast message will pass over any link in the network between the sender (server) and multicast router R1. Copies of the message will be made only where paths diverge at a router (here at routers R1, R2 and R3). Note that the "merging" of multicast streams at traffic replication points (such as R1, R2 and R3) involves complex algorithms.

### RSVP and Multicasting

RSVP may be used for multicast transmission. The RSVP PATH message will follow exactly the same path as the stream itself also for multicast transmission.

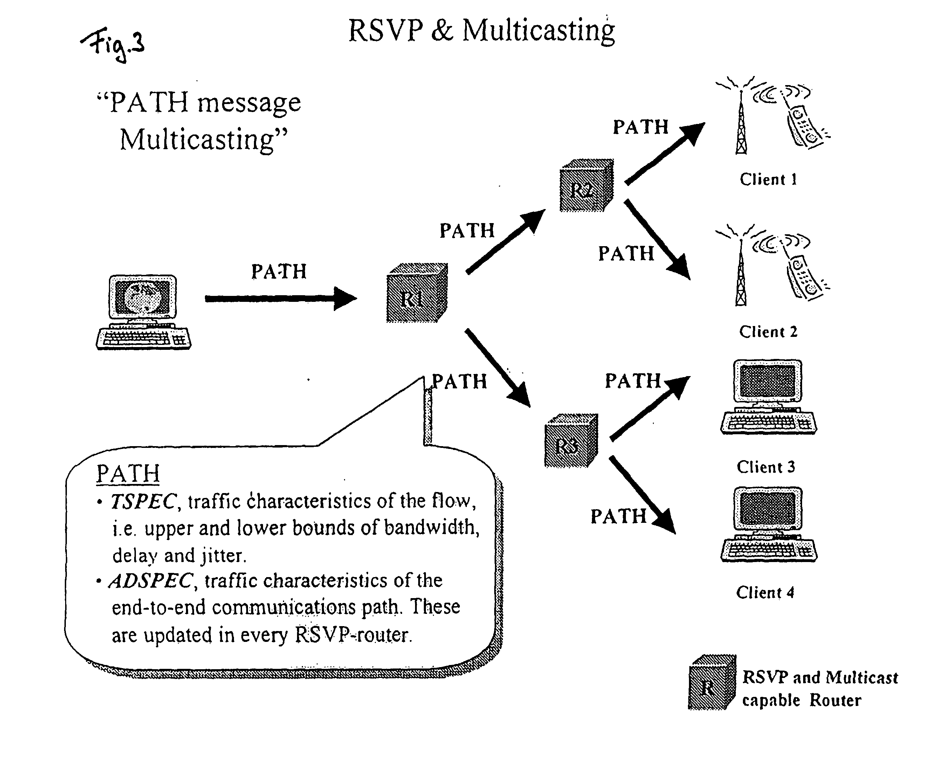

Fig. 3 shows the multicasting of the PATH message. The routers R1, R2, and R3 have multicasting and RSVP capabilities.

The sender periodically sends a PATH message for each data flow it originates.

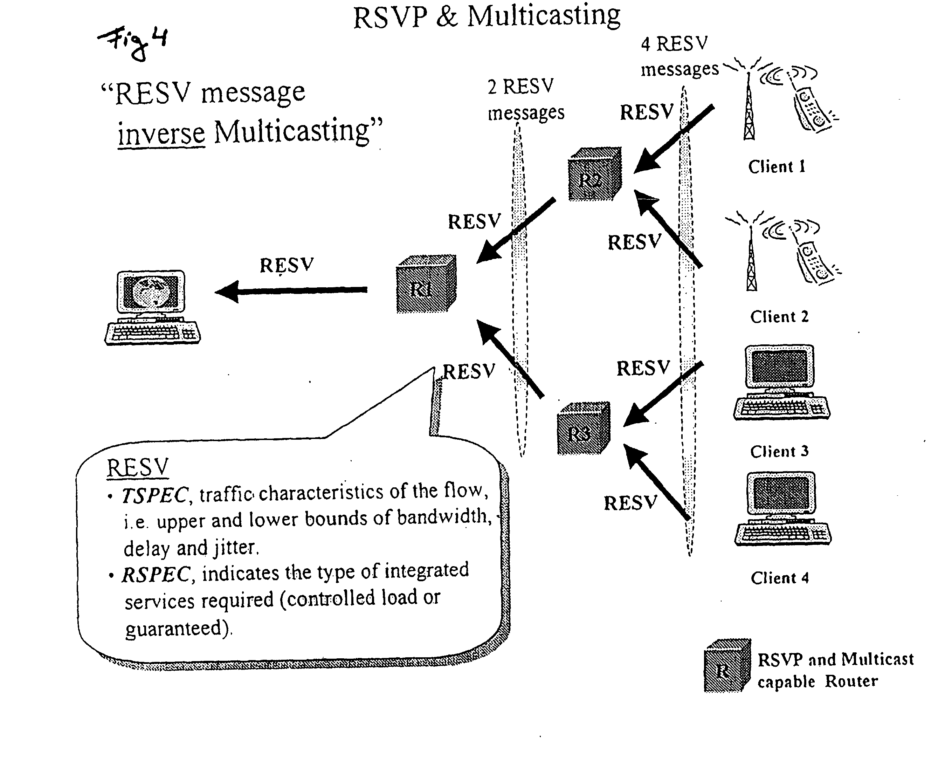

The RESV-message is sent by the recipients (clients 1, 2, 3, and 4) of the stream towards the source following the exact inverse path of the PATH-message. The stream itself is characterized by a filter, so a single reservation can apply to several streams (e.g. several sources in a conference), i.e. a shared reservation. This is reflected in Fig. 4.

Fig. 4 shows that multiple reservations for a multicast stream can be merged. If, for example, client 3 requires a low delay and client 4 is prepared to cope with more delay for the same multicast stream, then only the largest reservation (i.e. lowest delay) will be forwarded upstream (i.e. from R3 to R1). The same applies in case e.g. client 3 wants to receive the base layer for a specific video codec, whereas client 4 wants to receive the base and an additional layer.

At branch points (i.e. the routers R1, R2, R3) in the distribution tree (to be) reserved TSPECs of the branches are not the same. The (to be) reserved TSPEC of a branch closer to the server is given by the maximum of the (to be) reserved TSPECS of its direct successors (in the direction of the destination).

### Differentiated Services

Differentiated Services (DiffServ) provide mailings within IP packet leaders to allow prioritization of traffic aggregates (i.e. "classes" of multiple flows). DiffServ is employed to design a simple architectural framework for QoS that can provide a variety of scalable end-to-end services access multiple separately administered domains with requiring complex inter-provide business arrangements or complex behaviors in forwarding equipment.

### Bandwidth Brokers

A Bandwidth Broker maintains information relating to SLSes that are defined between a DiffServ domain and its customers, where DiffServ domain denotes a region of shared trust, administration, provisioning, etc. Customers include local users as well as the adjacent networks that provide connectivity to other parts of e.g. the Internet. The internals of a DiffServ domain are not relevant to its customers, as long as the external obligations are fulfilled. The Bandwidth Broker uses this SLS information to configure routers in the local DiffServ domain (mainly the edge routers), and to make admission control decisions. The Bandwidth Broker is required to keep track of QoS resources, make policy decisions based on SLS information, and communicate policy enforcement information to the edge devices within the DiffServ domain. Furthermore, the bandwidth broker establishes and maintains SLAs with neighbouring domains.

The general idea is for a customer to buy from their provider a profile for higher quality service, and the provider polices marked traffic from the site to ensure that the profile is not exceeded. Where providers peer, they arrange for an aggregate higher-quality profile to be provided, and police each other's aggregate if it exceeds the profile.

In this way, policing only needs to be performed at the edges to a provider's network based on the assumption that within the network there is sufficient capacity to cope with the amount of higher-quality traffic that has been sold.

Before marked packets (DiffServ) from a data source are admitted to a Diffserv domain, the source must signal its local Bandwidth Broker to initiate a service reservation. The potential source is authenticated and subjected to local admission control policies. If the service reservation is admitted locally, the Bandwidth Broker may initiate an end-to-end reservation request along the chain of Bandwidth Brokers in the DiffServ networks to be traversed by the data flow. When a network-wide admission control decision has been made, the Bandwidth Broker will configure the routers in the DiffServ domain to support the requested service profile. The Bandwidth Broker allows separately administered DiffServ domains to manage their network resources independently, yet still cooperate with other domains to provide dynamically allocated end-to-end QoS.

### Problems

Currently, RSVP supports limited communication/service quality negotiations between servers and clients. Only the resulting end-to-end bandwidth and ADSPEC-information related data are provided to the clients. This information may be used by the clients to verify whether they would like to use the service with the indicated service quality characteristics. Other service quality characteristics, such as security, reliability, and actual jitter are missing and therefore not taken into account for the service quality negotiation. Such service quality characteristics are missing from the ADSPEC-information and are thus not updated on the way from the server to the client(s). As mentioned above, jitter information is implicitly included in the PATH-message, in particular in the token bucket parameters, but any changes thereof are not considered.

Moreover, no mechanisms are currently available to efficiently collect information about the network domains (and clients) between the server(s) and client(s).

Since no mechanism for information collection is available, there is also no mechanism to handle this in a more efficient way in case of multicasting for one-to-many or many-to-many service provisioning. Further, a service quality optimization with respect to high(er) priority clients or servers is not available.

Further, no mechanism exists to limit the number of wasted resource allocations in case of multicasting.

In order to overcome the existing problems of the prior art, the object of the present invention is to provide a solution for improving communications in a network utilizing a resource reservation protocol, such as the RSVP.

### BRIEF DESCRIPTION OF THE INVENTION

The basic idea of this invention is to collect information by extending the signaling messages in a protocol like the RSVP. Information is collected throughout the network, e.g. from all network domains and/or subnetworks, between servers and corresponding client(s). Any network component serving as a sender, e.g. servers, notes, routers, may use the collected information to check the actual status of the network, to make service distribution decisions, to make service provisioning decisions (e.g. links in a proxy or gateway), etc. RSVP is just an example for a protocol for which the present invention can be utilized. Therefore, the mechanisms according to the invention described here can be applied to similar or comparable protocols.

The present invention optionally extends negotiation information between a server and respective clients which can be used by clients to decide on the acceptance of an overall service provisioning quality.

In addition to an information collection for a single-client case, the present invention is also applicable for multi-client cases wherein multicasting and/or aggregation of collected information is utilized.

Moreover, a pre-reservation mechanism provided by the present invention can be implemented to prevent wasted resource allocations and extensive signaling in case of multicasting and/or to improve the quality of service for high priority clients.

Thus, the present invention addresses an information collection mechanism, quality of service negotiations between a server and its client(s), and a pre-reservation mechanism of network resources, for single-client and/or multi-client applications, wherein in the case of a multi-client application multicasting and/or aggregation of collected information is possible.

To achieve the underlying object, the present invention provides a method as in claim 1 and a network system as in claim 34 for improving resource reservations and allocations in a network operated by a given signaling message protocol, e.g. the RSVP. According to the given protocol, a sender signal including sender traffic characteristics information of a sender is generated and transmitted via at least one network. According to the invention, network traffic characteristics information is included into the sender signal while being transmitted to obtain an extended sender signal. The network traffic characteristics information is indicative of traffic characteristics of the network. Further, network resources are reserved and/or allocated in dependence of the network traffic characteristics information.

Furthermore, it is possible to receive the extended sender signal by a receiver and to generate, in response thereto, a receiver signal according to the given protocol including receiver traffic characteristics information being indicative of traffic characteristics of the receiver. Additionally, the network traffic characteristics information is included into the receiver signal to obtain an extended receiver signal. As a result, network resources can be reserved and/or allocated in dependence of the network traffic characteristics information and the receiver traffic characteristics information.

In order to further improve service quality negotiations, it is possible to transmit the extended receiver signal to the sender, while updating the extended receiver signal by including actual network traffic characteristics information during transmission. As a result, network resources can be allocated in dependence of the updated extended receiver signal.

It is preferred to transmit the extended sender signal and/or the extended receiver signal and/or the updated extended receiver signal via at least one router and to include and/or update the network traffics characteristics information by including and/or updating information being indicative of traffic characteristics of the at least one router.

The reservation and/or allocation of network resources can also be performed by the sender in dependence from the signal received from the at least one network, and/or the receiver in dependence of the received extended sender signal, and/or the at least one router in dependence of the received signal received from the network.

To implement a pre-reservation and/or pre-allocation mechanism, reservation and/or allocation information is included into the sender signal according to the given protocol. The reservation and/or allocation information is indicative of network resources to be pre-reserved and/or pre-allocated. Thus, it is possible to pre-reserve and/or pre-allocate network resources in dependence of the reservation and/or allocation information.

Improved network information can be obtained by including actual reservation and/or allocation information into the extended sender signal including the reservation and/or allocation information, the actual reservation and/or allocation information being indicative of network resources actually pre-reserved and/or pre-allocated.

In this case, it is preferred that the at least one router reserves and/or allocates available resources thereof in dependence of the reservation and/or allocation information of the sender and includes the actual reservation and/or allocation information corresponding to the actually pre-reserved and/or pre-allocated router resources.

For a client oriented resource reservation and/or allocation, the receiver includes a reservation and/or allocation request into the extended receiver signal in dependence of the received actual reservation and/or allocation information. Here, the reservation and/or allocation request is indicative of network resources to be used for communication with the sender.

As a result, it is possible to reserve and/or allocate network resources in dependence of the reservation and/or allocation request in the extended receiver signal and/or the updated extended receiver signal.

If routers are employed, the at least one router can reserve and/or allocate pre-reserved and/or pre-allocated router resources in dependence of the reservation and/or allocation request in the signal transmitted from the receiver.

As a further option, indicators being indicative of resource reservations and/or allocations can be included in the signals transmitted via the network (e.g. in the sender signal, the extended sender signal and/or the extended receiver signal). Here, it is possible to use an indicator with respect to at least one of the network resources whether a resource reservation and/or resource allocation is performed for signals transmitted downstream to clients (e.g. (extended) sender signal) and/or for signals transmitted upstream to senders (e.g. an extended receiver signal). Since some of the pre-reserved and/or pre-allocated resources in response to signals transmitted downstream to clients may be released upon a reception of related signals transmitted upstream to senders, such resources may be pre-reserved and/or pre-allocated in dependence of higher priority resource reservation and/or allocation requests. Therefore, (extended) sender signals including reservation and/or allocation information can include "minimum resource required" indicators. Resources exceeding this minimum resources can optionally be used with respect to reservations and/or allocations by higher priority resource requests. As a result, a faster connection setup for transmissions in the network can be obtained, since respective resources have already been pre-reserved and/or pre-allocated.

In order to avoid unnecessary use of network resources, pre-reserved and/or pre-allocated network resources exceeding the reservation and/or allocation request of the receiver are released. Here, it is possible that the at least one router releases its pre-reserved and/or pre-allocated resources in dependence of the reservation and/or allocation request in the signal transmitted from the receiver.

However, signals transmitted upstream from the receiver (e.g. (extended) receiver signals) can specify that all pre-reserved and/or pre-allocated resources remain reserved and/or allocated, or that a maximum or a minimum thereof remains reserved and/or allocated. This procedure still leads to an improved quality of service and in particular provides a fast connection setup.

Moreover, the present invention provides network system utilizing a given signaling message protocol for network resource reservations and allocations, a sender, a receiver, and/or at least one network for connecting the sender and the receiver are operated by one of the methods according to the invention.

### BRIEF DESCRIPTION OF THE FIGURES

In the following description of preferred embodiments, it is referred to the accompanying figures wherein:
- Fig. 1: shows RSVP signaling messages and parameters thereof,
- Fig. 2: illustrates an IP multicasting network,
- Fig. 3: illustrates a PATH-message multicasting in a RSVP network,
- Fig. 4: illustrates a RESV-message inverse multicasting in the RSVP network of Fig. 3,
- Fig. 5: illustrates a network utilizing RSVP-messages extended according to the invention,
- Fig. 6: illustrates a RSVP network utilizing RESV-messages extended according to the invention for inverse multicasting, and
- Fig. 7: illustrates a pre-reservation mechanism according to the invention in a RSVP network.

### DESCRIPTION OF PREFERRED EMBODIMENTS

As described above, senders, receivers, and communication means (routers) for routing communications between the senders and the receivers in a network utilize reservation protocols in order to set up the necessary network state and to support communications and associated services between the senders and receivers. One example for such a reservation protocol is the resource reservation protocol (RSVP). The following embodiments are set forth with respect to the RSVP, however the underlying principle is suitable to improve other network reservation protocols, e.g. ST-II.

### Basic embodiment

In order to improve service quality negotiations between servers and clients communicating via a network utilizing the RSVP, the signaling messages of the RSVP, namely the PATH-messages and the RESV-messages, are extended/modified to include further information being indicative of the actual status of the network and its network domains, respectively. This information is collected from all parts of the network used for communication between a server and a client. In addition to the information collected for all respective network domains, it is contemplated that this information also includes information being indicative of the actual status of a server and its client(s).

On the basis of the collected information, the server, the client(s) and routers of the network and/or network domains are enabled to check the actual status of the network and/or its domains, to control the distribution of services provided via the network, to control the provisioning of network services (e.g. links to a proxy or gateway), to perform service quality negotiations between the server and its client(s), and to pre-reserve/pre-allocate communication resources of the network. Such a procedure can be applied to both single-client and multi-client applications, wherein for the latter case multicasting and/or an aggregation of the collected information is an additional option.

Referring to a PATH-message of the RSVP, the traffic specification (TSPEC) thereof defining the traffic characteristics of a server is extended by information characterizing the actual traffic characteristic of the network, and in particular of the network domains between the server and its client(s) and their routers, respectively. Further, the TSPEC can be extended by traffic characteristics information of the client. It has to be emphasised, that the TSPEC itself is not modified.

The traffic characteristics information of the network and the client can be provided as information directly identifying the respective traffic characteristics. As an alternative, the traffic characteristic information of the network and the client can represent variations of the actual traffic characteristics of the network and the client with respect to previous traffic characteristics thereof. Such variations can be caused by a variation of communications resources of the network or the client, wherein such resource variations include an increased and a decreased resource availability. In particular, these variations can relate to previous traffic characteristics of same network components (e.g. network domains, routers, servers, clients, gateways, etc.) and/or to traffic characteristics of previous network components, i.e. network components located more upstream with respect to the direction of data communication.

In general, messages of the RSVP are generated by each network component (server, client, router) on the basis of a received message for forwarding the information thereof. Therefore, PATH-messages extended as explained above can include either above type of traffic characteristics information of the network and the client(s) depending on the network component (server, router, client) forwarding the respective PATH-message.

Further, ADSPEC-information of the PATH-message can be extended by other communication characteristics, such as security, reliability, and jitter information. Comparable to the above traffic characteristics information, such further communication characteristics information are added to the ADSPEC-information of the server by the routers and the client(s).
Again, the ADSPEC-information itself is not changed.

In order to access the actual communications state of the network and the client(s), the traffic characteristics information collected while forwarding the PATH-message are added to the RESV-message returned from the client(s) to the server. In particular, the collected traffic characteristics information is added to the RESV-message according to the RSVP to extend the TSPEC thereof. An improved communication quality negotiation between the server and its client(s) can be achieved by further extending the TSPEC of the RESV-message with information being indicative of the resulting end-to-end communication characteristics. Receiving such an extended RESV-message, the server obtains substantial information of the actual communications status and is enabled to adapt its communications (distribution) correspondingly, e.g. by modifying the distribution of provided services.

Since the client(s) is (are) also provided with information being indicative of the actual communications status of the network and, in addition, of the server, the respective RESV-message can be generated considering the received communications status information. If, for example, a client determines that the over-all communication quality (quality of service) is not acceptable, the RESV-message will not be returned and thus no resource allocation for the respective communication path between the client and the server is performed.

Further, a service reject by the client can include information indicative of reasons for the service reject. In response, the server can use such information for e.g. traffic engineering and/or network planning purposes.

Moreover, as a further option, the RSPEC-information and/or the FilterSPEC-information of the RESV-message communicated to the server can be extended by further information being indicative of the communication (quality) characteristics in a manner comparable to the ADSPEC-information of the PATH-message.

### Traffic characteristics information collection for a network domain serving a single client

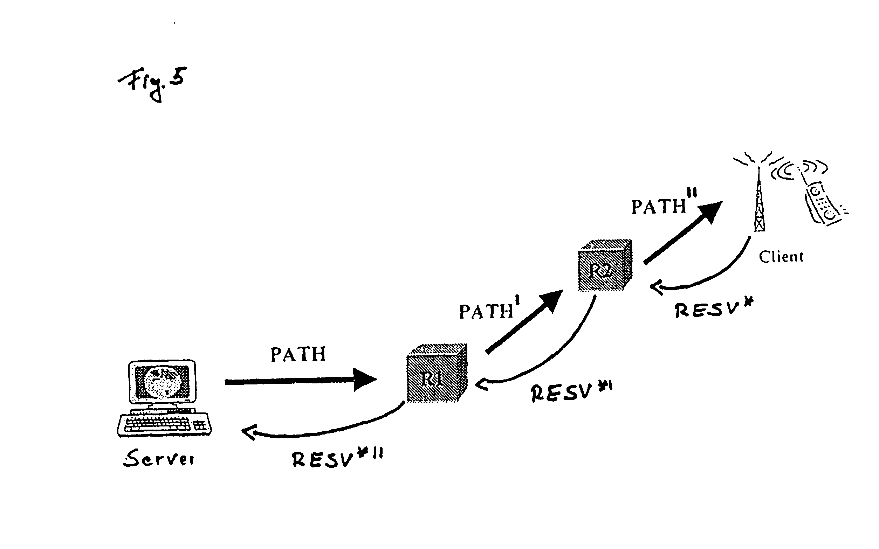

For the purpose of simplicity, the embodiment shown in Fig. 5 utilizes RSVP-messages only including respective TSPEC-information.

As shown in Fig. 5, a communication path between a server and a client is routed via routers R1 and R2 constituing the network domain serving the client. The server generates a PATH-message according to the RSVP and transmits the same to the router R1. In order to indicate the type of mechanism, which is used or which is to be used, the PATH-message can be extended accordingly.

In response thereto, the router R1 processes the received PATH-message according to the RSVP. Assuming this processing results in a validity for the received PATH-message, the router R1 generates a conventional PATH-message including, according to the RSVP, the traffic characteristics provided by the server and updated routing information. Here it is pointed out, that this conventional PATH-message does not include any information representing the actual traffic characteristics of the network, so far.

Further, the router R1 generates information which represent its actual traffic characteristics. Such information can include the maximal/average peak rate of flow, the available bandwidth, the actual delay, the actual jitter, the actual security level for data communications, actual allocated resources, available buffer space, and the like. This traffic characteristics information of the router R1 is added to its conventional PATH-message such said a message PATH' is obtained.

The PATH'-message is transmitted to the router R2 which generates, in response thereto, a message PATH'' in a manner comparable to the generation of the PATH'-message.

The PATH''-message transmitted from the router R2 is received by the client. In case, the processing of the PATH''-message by the client is indicative of a communication/service quality being not acceptable for client, the client generates no RESV-message.

In case, the PATH''-message is indicative of a communications/service quality being acceptable for the client, the client generates a RESV*-message. The RESV'-message comprises a conventional RESV-message according to the RSVP and, further, the collected traffic characteristics information. In addition, the RESV*-message can include information representing the end-to-end characteristics calculated for the communications between the server and the client performed so far.

As a further option, it is possible that the RESV*'-message received by the router R2 is extended by its actual traffic characteristics information and transferred as a RESV*'-message to the router R1. Comparable, the RESV*'-message is extended by the router R1 and transferred as a message RESV*''-message to the server.

On the basis of the received RESV*''-message, the server is enabled to access the actual communications status of the network domain serving the client. It is pointed out that this collection of traffic characteristics information can be performed when a communications/service is to be provided to the client, or can be just used to collect such information without providing communications/services. In order to inform the routers R1, R2 and/or the client whether the collection of traffic characteristics information is performed prior to the provision of communications/services or just for an assessment of the actual network status, the server can transmit a respective information, e.g. an indicator.

### Multicasting aggregation

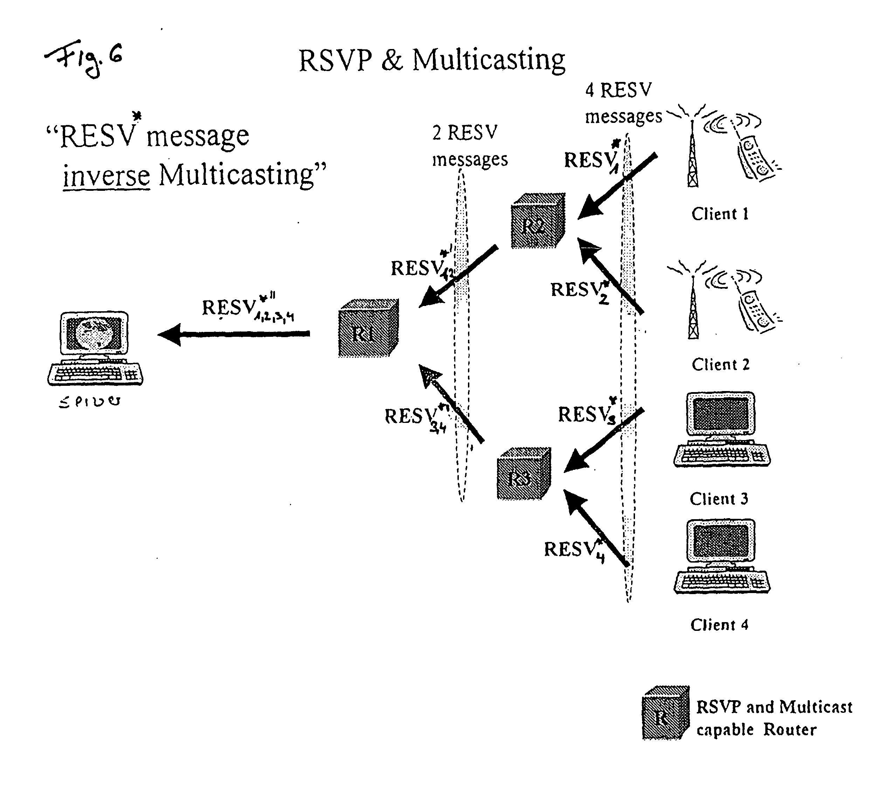

In order to provide communications/services between one or several servers and several clients, the above described multicasting is used for the message distribution. For the collection of traffic characteristics information, the PATH-messages from the server(s) and the routers of the (respective) network domain(s) are extended as set forth above for the single client case. Therefore, the respective extended PATH-messages from the server to the clients 1, 2, 3 and 4 are not shown in Fig 6.

As explained above, the RESV-message received by a server for a conventional RSVP multicasting comprises aggregated RESV-messages from the respective clients. This aggregation serves to merge multiple reservations from several clients for a multicast stream.

In order to obtain a RESV*-message (i.e. a RESV-message extended by traffic characteristics information), an aggregation step is performed to provide the traffic characteristics information of the network domains serving the clients 1, 2, 3 and 4 and the resulting communications/service quality for each end-to-end (server-client) connection.

Assuming that the traffic characteristics of the connections (networks) between the router R2 and the client 1, and the router R2 and the client 2 are the same, information being indicative of these traffic characteristics only need to be communicated to the server once. As a result, the RESV*_{1,2}'-message communicated from the router R2 to the router R1 only contains traffic characteristics information of the client 1 provided by the RESV*₁-message, the traffic characteristics information of the client 2 provided by the RESV*₂-message and, just once, traffic characteristics information related to the network domain comprising the router R2, and the clients 1 and 2.

In case the traffic characteristics of the networks between the router R2 and the client 1, and the router R2 and the client 2 are not the same, or in case the clients 1 and 2 are not comprised by the same network domain, the router R2 must determine the overlap of the respective traffic characteristics information and aggregate the traffic characteristics information accordingly. As an alternative, router R2 can also just select e.g. the traffic characteristics which are received first.

This aggregation step is accordingly performed with respect to the router R3 and the router R1, respectively, wherein the transmitted RESV*'_{3,4}-message and the RESV*'_{1,2,3,4}-message are extended by the respective traffic characteristics information of the network domains including routers R1 and R3.

As a result, the RESV*''_{1,2,3,4}-message received by the server can only comprise, beside the traffic characteristics information of the clients 1, 2, 3 and 4 and the routers R1, R2 and R3, traffic characteristics information of three network domains.

As an option compared to the above described network-wide aggregation for network domains, it is contemplated to perform a network domain related aggregation. Here, aggregated traffic characteristic information per network domain is included in the messages transmitted in direction to the server. As a result, with reference to Fig. 6, the server receives a message including the traffic characteristics information of the RESV*₁- and RESV*₂-messages, of the RESV*₃- and RESV*₄-messages, and the RESV*_{1,2}-and RESV*_{3,4}-messages.

### Pre-reservation of network resources

As explained above, RSVP resource reservations for a network or network domains are obtained by transmitting a respective ADSPEC-information comprised by a PATH-message. The ADSPEC-information is received by the network or the network domains, and especially the routers thereof, to determine the level of resource reservation required for a desired server-client communication/service quality. For allocating the reserved resources, the routers utilize a RESV-message transmitted from the client to allocate the necessary resources. In particular, RSVP-routers along the upstream path (i.e. in a communication direction towards a server) receiving RESV-message(s) utilize an admission control to authenticate respective resource request and allocate necessary resources. If a router can not provide the requested resources (e.g. due to a lack of resources or authorization failures), the router returns an error message back to the client. If the resource request(s) can be satisfied, the respective router sends the respective RESV-message(s) upstream to the next router.

For example in the case of a multicasting RSVP system, the following procedure of pre-reserving resources prevents unnecessary resource reservations downstream from the server to the client and that e.g. a router close to the server can not provide the required resources for allocation resulting in error messages sent to the client. A particular effect decreasing the communication/service quality (e.g. communication transmission time) of such error messages sent back to the client is the release of allocated resources previously allocated by routers arranged between the error message sending router and the client. Further, correct and proper processing of such error messages generated by different clients is complicated.

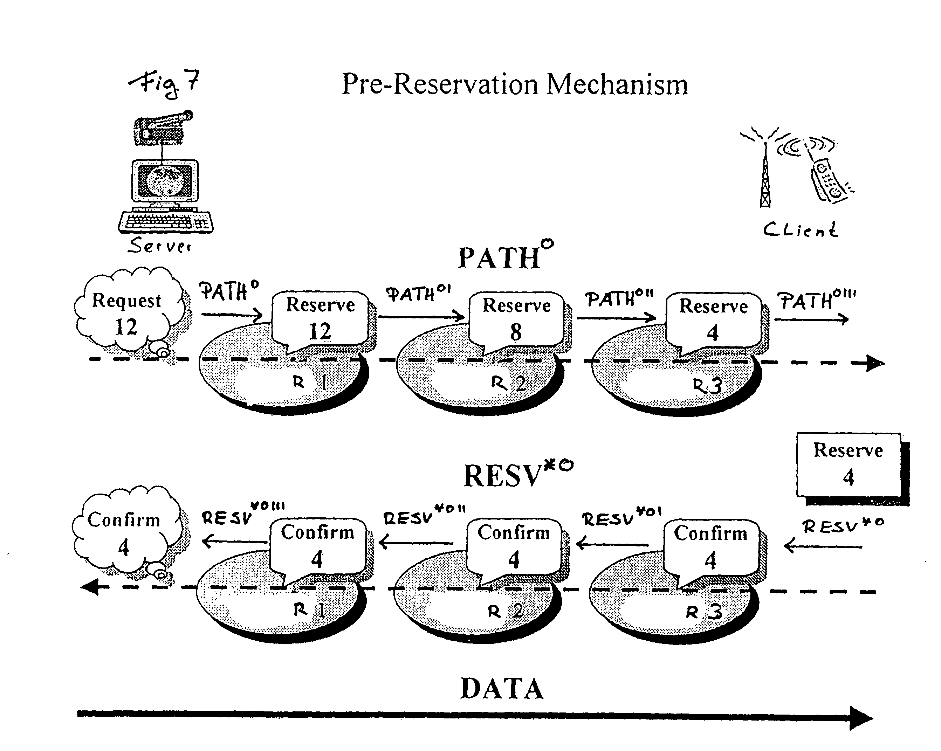

The pre-reservation mechanism shown in Fig. 7 is enabled by the modification of the RSVP as described above. Beside the extension of the RSVP-messages transmitted from the server and the client, as detailed above, the PATH-message of the server is extended by a pre-reservation request. In Fig. 7, this extension is indicated by the index "°". The pre-reservation request of the server specifies a resource type and the extend thereof to be reserved.

Comparable thereto, the client extends the extended RESV*-message generated as explained above by a allocation request. Here, the index "°" is indicative of the allocation request.

Referring to the example shown in Fig. 7, the server requests 12 units of the specified resource type. Upon receiving the PATH°-message, the router R1 determines whether he can satisfy this request. Since the router R1 is able to provide the requested resources, the router R1 pre-reserves 12 units.

The router R1 generates a PATH°'-message extended by the above traffic characteristics information and the pre-reservation request. Although router R2 can only provide 8 units, which are reserved, the PATH°" -message of router R2 is generated and transmitted to the router R3. In contrast thereto, according to a conventional RSVP system, an error message would be returned to a client in response to a RESV-message thereof to indicate that a resource request can not be satisfied.

The router R3 is able to provide 4 units of the requested resource and reserved the same. Again, no error message is returned to the server, but a PATH°''-message is communicated to the client.

Therefore, the client gets a communication/service resource request which is agreed and confirmed by all routers R1, R2 and R3 between the server and the client.

Upon confirmation of the received resource request, the client generates a RESV*°-message extended as the explained above and including an allocation request. Since the received resource request indicates that 4 units of the requested resource type can be provided for the overall communications connection between the server and the client, the allocation request generated by the client indicates that four units of the requested resource type are needed and should be allocated by the routers R1, R2 and R3.

While transmitting the RESV*^{°}'-, RESV*^{°}''- and RESV*^{°}'''-messages, which include the above explained extensions by the routers R1, R2 and R3 and the allocation request of the client, each of the routers R1, R2 and R3 allocate 4 units of the requested resource type and release the previously reserved units actually not needed.

Further, messages transmitted upstream from the client and routers R1, R2, and R3 (e.g. RESV*^{°}'-, RESV*^{°}''-, and RESV*^{°}'''-messages) can include information specifying that all pre-reserved and/or pre-allocated resources remain reserved and/or allocated, or that a maximum or minimum pre-reserved and/or pre-allocated resources remain reserved and/or allocated. This approach still results in an improved QoS.

The pre-reservation/pre-allocation mechanism can be used to ensure that clients and/or servers having a high(er) priority will be provided with required resources.

Additionally, it is contemplated that the server can extend his RSVP-message by information (e.g. in form of an indicator) representing an upper and/lower limit of resources to be re-reserved (maximum/minimum resource reservation indicator).

Since some of the pre-reserved resources in response to a PATH°-message may be released upon the reception of the respective RESV*°-message, such resources could be partly used by an allocation request having a higher priority. As set forth above, an indicator in each router is used to specify whether a resource reservation is an actual resource allocation in response to a RESV-message or a pre-reservation in response to a PATH-message. To specify the amount of pre-reserved resources which can be used to satisfy a higher priority resource allocation, the above minimum resource reservation indicator can be used. The amount of resources above the limit defined by this indicator can be optionally used to fulfill a higher priority resource allocation request related to a different PATH-request. As a result, a communication connection related to the higher priority resource allocation request can be setup faster since these resources have already been reserved and no separate reservation is required.

Comparable to the maximum/minimum indicators of the PATH°-message, the RESV*°-message can specify a minimum and/or a maximum of resources (types) to be allocated. For example, the RESV*°-message specifies said all routers should provide the same minimum bandwidth, such that all bandwidth related resources of the routers unnecessarily reserved are released.

Especially the utilization of minimum resource indicators for the PATH°- and RESV*°-messages guaranties said servers and/or clients having a higher priority are provided the required resources, since related higher priority resource requests can be fulfilled and are not blocked by a reservation of resources.

## Claims

1. A method for improving resource reservations and allocations in a network operated by a given signaling message protocol, the method comprising:
- generating a sender signal (PATH-message) according to the given protocol including sender traffic characteristics information of a sender (server), and
- transmitting the sender signal (PATH-message) via at least one network,
**characterized by**
- including network traffic characteristics information into the sender signal (PATH-message) while being transmitted to obtain an extended sender signal (PATH'-message), the network traffic characteristics information being indicative of traffic characteristics of the network, and
- reserving and/or allocating resources of the network in dependence of the network traffic characteristics information.

2. The method according to claim 1, comprising:
- receiving the extended sender signal (PATH'-message) by a receiver (client),
- generating a receiver signal (RESV-message) according to the given protocol including receiver traffic characteristics information being indicative of traffic characteristics of the receiver (client),
- including the network traffic characteristics information into the receiver signal (RESV-message) to obtain an extended receiver signal (RESV*-message), and
- reserving and/or allocating resources of the network in dependence of the network traffic characteristics information and the receiver traffic characteristics information.

3. The method according to claim 2, comprising:
- transmitting the extended receiver signal (RESV*-message) to the sender (server) via the at least one network,
- updating the extended receiver signal (RESV* -message) by including actual network traffic characteristics information to obtain the updated extended receiver signal (RESV*' while transmitting the extended receiver signal (RESV*-message), and
- reserving and/or allocating resources of the at least one network in dependence of the updated extended receiver signal (RESV*'-message).

4. The method according to one of the claims 1 to 3, comprising:
- transmitting the extended sender signal (PATH'-message) via at least one router (R1, R2, R3) of the at least one network, and
- including and/or updating the network traffics
characteristics information by including and/or updating information being indicative of traffic characteristics of the at least one router (R1, R2, R3).

5. The method according to one of the claims 2 to 4, comprising:
- transmitting the extended receiver signal (RESV*-message) via the at least one router (R1, R2, R3) of the at least one network, and
- including and/or updating the network traffics characteristics information by including and/or updating information being indicative of traffic characteristics of the at least one router (R1, R2, R3).

6. The method according to one of the claims 3 to 5, comprising:
- transmitting the updated extended receiver signal (RESV*'-message) via the at least one router (R1, R2, R3) of the at least one network, and
- including and/or updating the network traffics characteristics information by including and/or updating information being indicative of traffic characteristics of the at least one router (R1, R2, R3).

7. The method according to one of the claims 2 to 6, wherein
- the sender (server) reserves and/or allocates network resources in dependence from the signal (RESV*-message, RESV*'-message) received from the at least one network.

8. The method according to one of the claims 2 to 7, wherein
- the receiver (client) receives and/or allocates network resources in dependence of the received extended sender signal (PATH'-message).

9. The method according to one of the claims 4 to 8, wherein
- the at least one router (R1, R2, R3) reserves and/or allocates its resources in dependence of the extended sender signal (PATH'-message).

10. The method according to one of the claims 5 to 9, wherein
- the at least one router (R1, R2, R3) reserves and/or allocates its resources in dependence of the extended receiver signal (RESV*-message).

11. The method of one of the claims 6 to 10, wherein
- the at least one router (R1, R2, R3) reserves and/or allocates its resources in dependence or the updated extended receiver signal (RESV*-message).

12. The method according to one of the preceding claims, comprising:
- including reservation and/or allocation information into the sender signal (PATH-message) according to the given protocol, the reservation and/or allocation information being indicative of network resources to be pre-reserved and/or pre-allocated, and
- pre-reserving and/or pre-allocating network resources in dependence of the reservation and/or allocation information.

13. The method according to claim 12, comprising:
- including actual reservation and/or allocation information into the extended sender signal (PATH°'-message) including the reservation and/or allocation information, the actual reservation and/or allocation information being indicative of network resources actually pre-reserved and/or pre-allocated.

14. The method according to claim 13 as far as depending from one of the claims 4 to 12, wherein
- the at least one router (R1, R2, R3) reserves and/or allocates available resources thereof in dependence of the reservation and/or allocation information of the sender (server), and
- includes the actual reservation and/or allocation information corresponding to the actually pre-reserved and/or pre-allocated router resources.

15. The method according to one of the claims 12 to 14 as far as depending from one of the claims 2 to 11, wherein
- the receiver (client) includes a reservation and/or allocation request into the extended receiver signal (RESV^{*}-message) in dependence of the received actual reservation and/or allocation information, the reservation and/or allocation request being indicative of network resources to be used for communication with the sender (server).

16. The method according to claim 15, comprising:
- reserving and/or allocating network resources in dependence of the reservation and/or allocation request in the extended receiver signal (RESV'^{*}-message).

17. The method according to claim 15 as far as depending from one of the claims 3 to 14 , comprising:
- reserving and/or allocating network resources in dependence of the reservation and/or allocation request in the updated extended receiver signal (RESV*°'-message).

18. The method according to claim 17 as far as depending from one of the claims 4 to 16, wherein:
- the at least one router (R1, R2, R3) reserves and/or allocates pre-reserved and/or pre-allocated router resources independence of the signal (RESV*°-message, RESV*°'-message) transmitted from the receiver (client).

19. The method of claim 17 or 18, wherein
- pre-reserved and/or pre-allocated network resources exceeding the reservation and/or allocation request of the receiver (client) are released.

20. The method according to claim 19 as far as depending from one of the claims 4 to 18, wherein
- the at least one router (R1, R2, R3) releases its pre-reserved and/or pre-allocated resources in dependence of the reservation and/or allocation request in the signal (RESV*°-message, RESV*°'-message) transmitted from the receiver (client).

21. The method according to one of the claims 15 to 20, wherein
- the receiver (client) includes information into the extended receiver signal (RESV*-message), the information being indicative of a maximum or a minimum of the pre-reserved and/or pre-allocated network resources to remain reserved and/or allocated.

22. The method of claim 21, wherein
- pre-reserved and/or pre-allocated network resources remain reserved and/or allocated in dependence of the information included into the extended receiver signal (RESV*-message) being indicative of the maximum or the minimum network resources to remain reserved and or allocated.

23. The method according to claim 22 as far as depending from one of the claims 4 to 21, wherein
- the at least on router (R1, R2, R3) maintains its pre-reserved and/or pre-allocated resources in dependence of the receiver information being indicative of the maximum or the minimum of network resources to remain reserved and/or allocated.

24. The method according to one of the preceding claims, wherein
- the signals (PATH-message, PATH'-message, RESV-message, RESV*-message, RESV*'-message, PATH°'-message, RESV*°-message, RESV*°'-message) include information being indicative whether a resource reservation and/or allocation is performed for a message transmitted to the sender (server).

25. The method according to one of the claims 2 to 24, wherein
- the signals (PATH-message, PATH'-message, RESV-message, RESV*-message, RESV*'-message, PATH°'-message, RESV*°-message, RESV*°'-message) include information being indicative whether a resource reservation and/or allocation is performed for a message transmitted in a direction to the receiver (client).

26. The method according to claim 24 or 25, wherein
- the information included into the transmitted signals comprise an indicator specifying a minimum of required network resources.

27. The method according to claim 26, wherein
- pre-reserved and/or pre-allocated network resources exceeding network resources specified by the indicator are used for at least one network resource request having a higher priority.

28. The method according to one of the preceding claims, wherein
- the given signaling message protocol is the resource reservation protocol, RSVP,
- the sender signal (PATH-message) is the PATH-message of the resource reservation protocol, RSVP.

29. The method according to one of the claims 2 to 28, wherein
- the receiver signal (RESV-message) is the RESV-message of the resource reservation protocol, RSVP.

30. The method according to one of the preceding claims, wherein:
- the method is utilized in a network serving a single-client and/or a multi-client application.

31. The method according to claim 30 as far as depending from one of the claims 2 to 29, wherein
- the signals (PATH-message, PATH'-message, PATH°'-message) transmitted to the client(s) are transmitted by utilizing a multicasting transmission.

32. The method according to claim 30 or 31, wherein
- the signals (RESV-message, RESV*-message, RESV*'-message, RESV*°-message, RESV*°'-message) transmitted to the sender (server) are transmitted by a utilization of an inverse multicasting transmission.

33. The method according to claim 31 or 32, wherein
- an aggregation of information included into the signals transmitted via the network is performed with the respect to the at least one network and/or components thereof.

34. A network system utilizing a given signaling message protocol for network resource reservations and allocations, comprising:
- a sender (server),
- a receiver (client), and
- at least one network for connecting the sender (server) and the receiver (client), wherein
- the sender (server) is adapted to be operated to:
- generate a sender signal (PATH-message) according to the given protocol including sender traffic characteristics information of the sender (server),
- transmit the sender signal (PATH-message) via the at least one network,
**characterized in that** the sender is adapted to
- include network traffic characteristics information into the sender signal (PATH-message) while being transmitted to obtain an extended sender signal (PATH'-message), the network traffic characteristics information being indicative of traffic characteristics of the network, and
- reserve and/or allocate resources of the network in dependence of the network traffic characteristics information.

35. The network system according to claim 34, wherein
- the sender (server) is adapted to be operated by the method according to one of the claims 2 to 33.

36. The network system according to claim 34 or 35, wherein the receiver (client) is adapted to be operated to:
- receive the extended sender signal (PATH'-message)
- generate a receiver signal (RESV-message) according to the given protocol including receiver traffic characteristics information being indicative of traffic characteristics of the receiver (client),
- include the network traffic characteristics information into the receiver signal (RESV-message) to obtain an extended receiver signal (RESV*-message), and
- reserve and/or allocate resources of the network in dependence of the network traffic characteristics information and the receiver traffic characteristics information.

37. The network system according to claim 36, wherein
- the receiver (client) is adapted to be operated by the method according to one of the claims 3 to 33.

38. The network system according to one of the claims 34 to 37, comprising:
- at least one router (R1, R2, R3) of the at least one network, the at least one router (R1, R2, R3) being adapted to be operated to:
- transmit the extended sender signal (PATH'-message) via the at least one network, and
- include and/or update the network traffics characteristics information by including and/or updating information being indicative of traffic characteristics of the at least one router (R1, R2, R3).

39. The network system according to claim 38 wherein
- the at least one router (R1, R2, R3) is adapted to be operated by the method according to one of the claims 5 to 33.

40. The network system according to one of the claims 34 to 39, wherein
- the given signaling message protocol is the resource reservation protocol, RSVP.

## Patentansprüche

1. Verfahren zum Verbessern von Betriebsmittelreservierungen und -Zuleitungen in einem Netz, welches von einem gegebenen Zeichengabe-Nachrichten-Protokoll betrieben wird, wobei das Verfahren umfaßt:
- Erzeugen eines Absendersignals (PATH-Nachricht) gemäß des gegebenen Protokolls, einschließlich Absenderverkehrsverhalten-Informationen eines Absenders (Server), und
- Übertragen des Absendersignals (PATH-Nachricht) über mindestens ein Netz,
**gekennzeichnet durch**
- das Einschließen von Netzverkehrsverhalten-Informationen in das Absendersignal (PATH-Nachricht) während dessen Übertragung zum Erhalt eines verlängerten Absendersignals (PATH'-Nachricht), wobei die Netzverkehrsverhalten-Informationen das Verkehrsverhalten des Netzes angeben, und
- das Reservieren und/oder Zuteilen von Betriebsmitteln des Netzes in Abhängigkeit der Netzverkehrsverhalten-Informationen.

2. Verfahren nach Anspruch 1, umfassend:
- das Empfangen des verlängerten Absendersignals (PATH'-Nachricht) von einem Empfänger (Kunde),
- das Erzeugen eines Empfängersignals (RESV-Nachricht) gemäß des gegebenen Protokolls, einschließlich Empfängerverkehrsverhalten-Informationen, die das Verkehrsverhalten des Empfängers (Kunde) angeben,
- das Einschließen der Netzverkehrsverhalten-Informationen in das Empfängersignal (RESV-Nachricht) zum Erhalt eines verlängerten Empfängersignals (RESV*-Nachricht), und
- das Reservieren und/oder Zuleiten von Betriebsmitteln des Netzes in Abhängigkeit der Netzverkehrsverhalten-Informationen und der Empfängerverkehrsverhalten-Informationen.

3. Verfahren nach Anspruch 2, umfassend:
- das Übertragen des verlängerten Empfängersignals (RESV*-Nachricht) an den Absender (Server) über das mindestens eine Netz,
- das Aktualisieren des verlängerten Empfängersignals (RESV*-Nachricht) durch das Einschließen aktueller Netzverkehrsverhalten-Informationen zum Erhalt des aktualisierten verlängerten Empfängersignals (RESV*'-Signals) während der Übertragung des verlängerten Empfängersignals (RESV*-Nachricht), und
- das Reservieren und/oder Zuteilen von Betriebsmitteln des mindestens einen Netzes in Abhängigkeit des aktualisierten verlängerten Empfängersignals (RESV*'-Signals).

4. Verfahren nach einem der Ansprüche 1 bis 3, umfassend:
- das Übertragen des verlängerten Absendersignals (PATH'-Nachricht) über mindestens einen Router (R1, R2, R3) des mindestens einen Netzes, und
- das Einschließen und/oder Aktualisieren der Netzverkehrsverhalten-Informationen durch das Einschließen und/oder Aktualisieren von Informationen, die das Verkehrsverhalten des mindestens einen Router (R1, R2, R3) angeben.

5. Verfahren nach einem der Ansprüche 2 bis 4, umfassend:
- das Übertragen des verlängerten Empfängersignals (RESV*-Nachricht) über den mindestens einen Router (R1, R2, R3) des mindestens einen Netzes, und
- das Einschließen und/oder Aktualisieren der Netzverkehrsverhalteninformationen durch das Einschließen und/oder Aktualisieren von Informationen, die das Verkehrsverhalten des mindestens einen Router (R1, R2, R3) angeben.

6. Verfahren nach einem der Ansprüche 3 bis 5, umfassend:
- das Übertragen des aktualisierten verlängerten Empfängersignals (RESV*'-Nachricht) über den mindestens einen Router (R1, R2, R3) des mindestens einen Netzes, und
- das Einschließen und/oder Aktualisieren der Netzverkehrsverhalten-Informationen durch das Einschließen und/oder Aktualisieren von Informationen, die das Verkehrsverhalten des mindestens einen Router (R1, R2, R3) angeben.

7. Verfahren nach einem der Ansprüche 2 bis 6, wobei
- der Absender (Server) Netzbetriebsmittel in Abhängigkeit des von dem mindestens einen Netz empfangenen Signals (RESV*-Nachricht, RESV*'-Nachricht) reserviert und/oder zuteilt.

8. Verfahren nach einem der Ansprüche 2 bis 7, wobei
- der Empfänger (Kunde) Netzbetriebsmittel in Abhängigkeit des empfangenen verlängerten Absendersignals (PATH'-Nachricht) empfängt und/oder zuteilt.

9. Verfahren nach einem der Ansprüche 4 bis 8, wobei
- der mindestens eine Router (R1, R2, R3) seine Betriebsmittel in Abhängigkeit des verlängerten Absendersignals (PATH'-Nachricht) reserviert und/oder zuteift.

10. Verfahren nach einem der Ansprüche 5 bis 9, wobei
- der mindestens eine Router (R1, R2, R3) seine Betriebsmittel in Abhängigkeit des verlängerten Empfängersignals (RESV'-Nachricht) reserviert und/oder zuteilt.

11. Verfahren nach einem der Ansprüche 6 bis 10, wobei
- der mindestens eine Router (R1, R2, R3) seine Betriebsmittel in Abhängigkeit des aktualisierten verlängerten Empfängersignals (RESV*'-Nachricht) reserviert und/oder zuteilt.

12. Verfahren nach einem der vorhergehenden Ansprüche, umfassend:
- das Einschließen von Reservierungs- und/oder Zuteilungsinformationen in das Absendersignal (PATH-Nachricht) gemäß dem gegebenen Protokoll, der Reservierungs- und/oder Zuteilungsinformationen, die vorab zu reservierende und/oder vorab zuzuteilende Netzbetriebsmittel angeben, und
- das Vorreservieren und/oder die Vorzuteilung von Netzbetriebsmitteln in Abhängigkeit der Reservierungs- und/oder Zuteilungsinformationen.

13. Verfahren nach Anspruch 12, umfassend:
- das Einschließen aktueller Reservierungs- und/oder Zuteilungsinformationen in das verlängerte Absendersignal (PATH°'-Nachricht) einschließlich der Reservierungs- und/oder Zuteilungsinformationen, wobei die aktuellen Reservierungs- und/oder Zuteilungsinformationen die aktuell vorreservierten und/oder vorzugeteilten Netzbetriebsmittel angeben.

14. Verfahren nach Anspruch 13, soweit dieser rückbezogen ist auf einen der Ansprüche 4 bis 12, wobei
- der mindestens eine Router (R1, R2, R3) verfügbare Betriebsmittel von diesem in Abhängigkeit der Reservierungs- und/oder Zuteilungsinformationen des Absenders (Server) reserviert und/oder zuteilt, und
- die aktuellen Reservierungs- und/oder Zuteilungsinformationen entsprechend den aktuell vorreservierten und/oder vorzugeteilten Router-Betriebsmitteln einschließt.

15. Verfahren nach einem der Ansprüche 12 bis 14, soweit diese rückbezogen sind auf einen der Ansprüche 2 bis 11, wobei
- der Empfänger (Kunde) eine Reservierungs- und/oder Zuteilungsanforderung in das verlängerte Empfängersignal (RESV*-Nachricht) in Abhängigkeit der empfangenen aktuellen Reservierungs- und/oder Zuteilungsinformationen einschließt, wobei die Reservierungs- und/oder Zuteilungsanforderung die für die Kommunikation mit dem Absender (Server) zu verwendenden Netzbetriebsmittel anzeigt.

16. Verfahren nach Anspruch 15, umfassend:
- das Reservieren und/oder Zuteilen von Netzbetriebsmitteln in Abhängigkeit der Reservierungs- und/oder Zuteilungsanforderung in dem verlängerten Empfängersignal (RESV*°-Nachricht).

17. Verfahren nach Anspruch 15, soweit dieser rückbezogen ist auf einen der Ansprüche 3 bis 14, umfassend:
- das Reservieren und/oder Zuteilen von Netzbetriebsmitteln in Abhängigkeit der Reservierungs- und/oder Zuteilungsanforderung in dem aktualisierten verlängerten Empfängersignal (RESV*°'-Nachricht).

18. Verfahren nach Anspruch 17, soweit dieser rückbezogen ist auf einen der Ansprüche 4 bis 16, wobei
- der mindestens eine Router (R1, R2, R3) vorreservierte und/oder vorzugeteilte Router-Betriebsmittel in Abhängigkeit des vom Empfänger (Kunde) übertragenen Signals (RESV*°-Nachricht, RESV*°'-Nachricht) reserviert und/oder zuteilt.

19. Verfahren nach Anspruch 17 oder 18, wobei
- vorreservierte und/oder vorzugeteilte Netzbetriebsmittel, die die Reservierungs- und oder Zuteilungsanforderung des Empfängers (Kunde) übersteigen, aufgelöst werden.

20. Verfahren nach Anspruch 19, soweit dieser rückbezogen ist auf einen der Ansprüche 4 bis 18, wobei
- der mindestens eine Router (R1, R2, R3) seine vorreservierten und/oder vorzugeteilten Betriebsmittel in Abhängigkeit der Reservierungs- und Zuteilungsanforderung in dem vom Empfänger (Kunde) übertragenen Signal (RESV*°-Nachricht, RESV*°'-Nachricht) auflöst.

21. Verfahren nach einem der Ansprüche 15 bis 20, wobei
- der Empfänger (Kunde) Informationen in das verlängerte Empfängersignal (RESV*-Nachricht) einschließt, wobei die Informationen ein Maximum oder ein Minimum der vorreservierten und/oder vorzugeteilten Netzbetriebsmittel angeben, das reserviert und/oder zugeteilt bleiben soll.

22. Verfahren nach Anspruch 21, wobei
- vorreservierte und/oder vorzugeteilte Netzbetriebsmittel in Abhängigkeit der in dem verlängerten Empfängersignal (RESV*-Nachricht) enthaltenen Informationen reserviert und/oder zugeteilt bleiben, die das Maximum oder das Minimum der Netzbetriebsmittel angeben, das reserviert oder zugeteilt bleiben soll.

23. Verfahren nach Anspruch 22, soweit dieser rückbezogen ist auf einen der Ansprüche 4 bis 21, wobei
- der mindestens eine Router (R1, R2, R3) seine vorreservierten und/oder vorzugeteilten Betriebsmittel in Abhängigkeit der Empfängerinformationen beibehält, die das Maximum oder das Minimum der Netzbetriebsmittel angeben, das reserviert oder zugeteilt bleiben soll.

24. Verfahren nach einem der vorhergehenden Ansprüche, wobei
- die Signale (PATH-Nachricht, PATH'-Nachricht, RESV-Nachricht, RESV*-Nachricht, RESV*'-Nachricht, PATH°*-Nachricht, RESV*°-Nachricht, RESV*°'-Nachricht) Informationen enthalten, die angeben, ob eine Betriebsmittelreservierung und/oder -zuteilung für eine an den Absender (Server) übertragene Nachricht durchgeführt wird.

25. Verfahren nach einem der Ansprüche 2 bis 24, wobei
- die Signale (PATH-Nachricht, PATH'-Nachricht, RESV-Nachricht, RESV*-Nachricht, RESV*'-Nachricht, PATH°*-Nachricht, RESV*°-Nachricht, RESV*°'-Nachricht) Informationen enthalten, die angeben, ob eine Betriebsmittelreservierung und/oder -zuteilung für eine in eine Richtung des Empfängers (Kunde) übertragene Nachricht durchgeführt wird.

26. Verfahren nach Anspruch 24, oder 25, wobei
- die in den übertragenen Signalen enthaltenen Informationen einen Anzeiger enthalten, der ein Minimum der erforderlichen Netzbetriebsmittel angibt.

27. Verfahren nach Anspruch 26, wobei
- vorreservierte und/oder vorzugeteilte Netzbetriebsmittel, die von dem Anzeiger angegebene Netzbetriebsmittel übersteigen, für mindestens eine Netzbetriebsmittelanforderung mit einer höheren Priorität verwendet werden.

28. Verfahren nach einem der vorhergehenden Ansprüche, wobei
- das gegebene Zeichengabe-Nachrichten-Protokoll das Betriebsmittelreservierungsprotokoll, RSVP, ist,
- das Absendersignal (PATH-Nachricht) die PATH-Nachricht des Betriebsmittelreservierungsprotokolls, RSVP, ist.

29. Verfahren nach einem der Ansprüche 2 bis 28, wobei
- - das Empfängersignal (RESV-Nachricht) die RESV-Nachricht des Betriebsmittelreservierungsprotokolls, RSVP, ist.

30. Verfahren nach einem der vorhergehenden Ansprüche, wobei
- das Verfahren in einem Netz angewendet wird, welches einer Ein-Kundenund/oder einer Multi-Kunden-Anwendung dient.

31. Verfahren nach Anspruch 30, soweit dieser rückbezogen ist auf einen der Ansprüche 2 bis 29, wobei
- die an den (die) Kunden übertragenen Signale (PATH-Nachricht, PATH'-Nachricht, PATH°'-Nachricht) unter Verwendung einer Multicasting-Übertragung übertragen werden.

32. Verfahren nach Anspruch 30 oder 31, wobei
- die an den Absender (Server) übertragenen Signale (RESV-Nachricht, RESV*-Nachricht, RESV*'-Nachricht, RESV*°-Nachricht, RESV*°'-Nachricht) unter Verwendung einer inversen Multicasting-Übertragung übertragen werden.

33. Verfahren nach Anspruch 31 oder 32, wobei
- eine in den über das Netz übertragenen Signalen enthaltene Aggregation von Informationen gegenüber dem mindestens einen Netz und/oder dessen Komponenten durchgeführt wird.

34. Netzsystem mit Verwendung eines gegebenen Zeichengabe-Nachrichten-Protokolls für Netzbetriebsmittelreservierungen und -Zuleitungen, umfassend:
- einen Absender (Server),
- einen Empfänger (Kunde), und
- mindestens ein Netz zum Verbinden des Absenders (Server) und des Empfängers (Kunde), wobei
- der Absender (Server) ausgestaltet ist zum Betrieb zum:
- Erzeugen eines Absendersignals (PATH-Nachricht) gemäß des gegebenen Protokolls, einschließlich Absenderverkehrsverhalten-Informationen des Absenders (Server), und
- Übertragen des Absendersignals (PATH-Nachricht) über das mindestens eine Netz,
**dadurch gekennzeichnet, daß** der Absender ausgestaltet ist zum
- Einschließen von Netzverkehrsverhalten-Informationen in das Absendersignal (PATH-Nachricht) während dessen Übertragung zum Erhalt eines verlängerten Absendersignals (PATH'-Nachricht), wobei die Netzverkehrsverhalten-Informationen das Verkehrsverhalten des Netzes angeben, und
- Reservieren und/oder Zuteilen von Betriebsmitteln des Netzes in Abhängigkeit der Netzverkehrsverhalten-Informationen.

35. Netzsystem nach Anspruch 34, wobei
- der Absender (Server) ausgestaltet ist zum Betrieb durch das Verfahren nach einem der Ansprüche 2 bis 33.

36. Netzsystem nach Anspruch 34 oder 35, wobei der Empfänger (Kunde) ausgestaltet ist zum Betrieb zum:
- Empfangen des verlängerten Absendersignals (PATH'-Nachricht)
- Erzeugen eines Empfängersignals (RESV-Nachricht) gemäß des gegebenen Protokolls, einschließlich Empfängerverkehrsverhalten-Informationen, die das Verkehrsverhalten des Empfängers (Kunde) angeben,
- Einschließen der Netzverkehrsverhalten-Informationen in das Empfängersignal (RESV-Nachricht) zum Erhalt eines verlängerten Empfängersignals (RESV*-Nachricht), und
- Reservieren und/oder Zuteilen von Betriebsmitteln des Netzes in Abhängigkeit der Netzverkehrsverhalten-Informationen und der Empfängerverkehrsverhalten-Informationen.

37. Netzsystem nach Anspruch 36, wobei
- der Empfänger (Kunde) ausgestaltet ist zum Betrieb durch das Verfahren nach einem der Ansprüche 3 bis 33.

38. Netzsystem nach einem der Ansprüche 34 bis 37, umfassend:
- mindestens einen Router (R1, R2, R3) des mindestens einen Netzes, wobei der mindestens eine Router (R1, R2, R3) ausgestaltet ist zum Betrieb zum:
- Übertragen des verlängerten Absendersignals (PATH'-Nachricht) über das mindestens eine Netz, und
- Einschließen und/oder Aktualisieren der Netzverkehrsverhalten-Informationen durch das Einschließen und/oder Aktualisieren von Informationen, die das Verkehrsverhalten des mindestens einen Router (R1, R2, R3) angeben.

39. Netzsystem nach Anspruch 38, wobei
- der mindestens eine Router (R1, R2, R3) ausgestaltet ist zum Betrieb durch das Verfahren nach einem der Ansprüche 5 bis 33.

40. Netzsystem nach einem der Ansprüche 34 bis 39, wobei
- das gegebene Zeichengabe-Nachrichten-Protokoll das Betriebsmittelreservierungsprotokoll, RSVP, ist.

## Revendications

1. Procédé pour améliorer les réservations et les allocations de ressources dans un réseau mis en fonctionnement par un protocole de message de signalisation donné, le procédé comprenant :
- la génération d'un signal d'émetteur (PATH-message) selon le protocole donné incluant des informations sur les caractéristiques du trafic d'émetteur d'un émetteur (serveur) et
- la transmission du signal d'émetteur (PATH-message) via au moins un réseau,
**caractérisé par**
- l'inclusion d'informations sur les caractéristiques du trafic de réseau dans le signal d'émetteur (PATH-message) alors qu'il est transmis afin d'obtenir un signal d'émetteur étendu (PATH'-message), les informations sur les caractéristiques du trafic de réseau indiquant des caractéristiques de trafic du réseau, et
- la réservation et/ou l'allocation de ressources du réseau en fonction des informations sur les caractéristiques du trafic de réseau.

2. Procédé selon la revendication 1, comprenant :
- la réception du signal d'émetteur étendu (PATH'-message) par un récepteur (client),
- la génération d'un signal d'émetteur (RESV-message) selon le protocole donné incluant des informations sur les caractéristiques de trafic de récepteur indiquant des caractéristiques de trafic du récepteur (client),
- l'inclusion d'informations sur les caractéristiques du trafic de réseau dans le signal de récepteur (RESV-message) afin d'obtenir un signal de récepteur étendu (RESV'-message), et
- la réservation et/ou l'allocation de ressources du réseau en fonction des informations sur les caractéristiques de trafic de réseau et des informations sur les caractéristiques de trafic de récepteur.

3. Procédé selon la revendication 2, comprenant :
- la transmission du signal de récepteur étendu (RESV*-message) à l'émetteur (serveur) via au moins un réseau,
- la mise à jour du signal de récepteur de réseau (RESV-message) en incluant des informations sur les caractéristiques de trafic de réseau afin d'obtenir le signal de récepteur étendu mis à jour (RESV*') tout en transmettant le signal de récepteur étendu (RESV*-message) et
- la réservation et/ou l'allocation de ressources d'au moins un réseau en fonction du signal de récepteur étendu mis à jour (RESV*'-message).

4. Procédé selon une des revendications 1 à 3, comprenant :
- la transmission du signal d'émetteur étendu (PATH'-message) via au moins un routeur (R1,R2,R3) d'au moins un réseau, et
- l'inclusion et/ou la mise à jour des informations sur les caractéristiques des trafics de réseau en incluant et/ou mettant à jour les informations indiquant des caractéristiques de trafic d'au moins un routeur (R1,R2,R3).

5. Procédé selon une des revendications 2 à 4, comprenant :
- la transmission du signal de récepteur étendu (RESV*-message) via au moins un routeur (R1,R2,R3) d'au moins un réseau, et
- l'inclusion et/ou la mise à jour des informations sur les caractéristiques des trafics de réseau en incluant et/ou mettant à jour les informations indiquant les caractéristiques de trafic d'au moins un routeur (R1,R2,R3).

6. Procédé selon une des revendications 3 à 5, comprenant :
- la transmission du signal de récepteur étendu mis à jour (RESV*'-message) via au moins un routeur (R1,R2,R3) d'au moins un réseau, et
- l'inclusion et/ou la mise à jour des informations sur les caractéristiques des trafics de réseau en incluant et/ou mettant à jour les informations indiquant des caractéristiques de trafic d'au moins un routeur (R1,R2,R3).

7. Procédé selon une des revendications 2 à 6, dans lequel :
- l'émetteur (serveur) réserve et/ou alloue des ressources de réseau en fonction du signal (RESV*-message, RES*'-message) reçu à partir d'au moins un réseau.

8. Procédé selon une des revendications 2 à 7, dans lequel :
- le récepteur (client) reçoit et/ou alloue des ressources de réseau en fonction du signal d'émetteur étendu reçu (PATH'-message).

9. Procédé selon une des revendications 4 à 8, dans lequel
- au moins un routeur (R1,R2,R3) réserve et/ou alloue ses ressources en fonction du signal d'émetteur étendu (PATH'-message).

10. Procédé selon une des revendications 5 à 9, dans lequel :
- au moins un routeur (R1,R2,R3) réserve et/ou alloue ses ressources en fonction du signal de récepteur étendu (RESV*-message).

11. Procédé selon une des revendications 6 à 10, dans lequel :
- au moins un routeur (R1,R2,R3) réserve et/ou alloue ses ressources en fonction du signal de récepteur étendu mis à jour (RESV*-message).

12. Procédé selon une des revendications précédentes, comprenant :
- l'inclusion d'informations de réservation et/ou d'allocation dans le signal d'émetteur (PATH-message) selon le protocole donné, les informations de réservation et/ou d'allocation indiquant des ressources de réseau qui doivent être pré-réservées et/ou pré-allouées, et
- la pré-réservation et/ou pré-allocation de ressources de réseau en fonction des informations de réservation et/ou d'allocation.

13. Procédé selon la revendication 12, comprenant :
- l'inclusion des informations effectives de réservation et/ou allocation dans le signal d'émetteur étendu (PATH°'-message) incluant les informations de réservation et/ou d'allocation, les informations effectives de réservation et/ou d'allocation indiquant des ressources de réseau effectivement pré-réservées et/ou pré-allouées.

14. Procédé selon la revendication 13, tant qu'elle dépend d'une des revendications 4 à 12, dans lequel :
- au moins un routeur (R1,R2,R3) réserve et/ou alloue des ressources disponibles de celui-ci en fonction des informations de réservation et/ou d'allocation de l'émetteur (serveur), et
- inclut les informations réelles de réservation et/ou d'allocation correspondant aux ressources de routeur effectivement pré-réservées et/ou pré-allouées.

15. Procédé selon une des revendications 12 à 14, tant qu'elle dépend d'une des revendications 2 à 11, dans lequel :
- le récepteur (client) inclut une demande de réservation et/ou d'allocation dans le signal de récepteur étendu (RESV'-message) en fonction des informations effectives de réservation et/ou d'allocation reçues, la demande de réservation et/ou d'allocation indiquant des ressources de réseau qui doivent être utilisées pour une communication avec l'émetteur (serveur).

16. Procédé selon la revendication 15, comprenant :
- la réservation et/ou l'allocation de ressources de réseau en fonction de la demande de réservation et/ou d'allocation dans le signal de récepteur étendu (RESV'°-message).

17. Procédé selon la revendication 15, tant qu'elle dépend d'une des revendications 3 à 14, comprenant :
- la réservation et/ou l'allocation de ressources de réseau en fonction de la demande de réservation et/ou d'allocation dans le signal de récepteur étendu mis à jour (RESV*°'-message).

18. Procédé selon la revendication 17, tant qu'elle dépend d'une des revendications 4 à 16, dans lequel:
- au moins un routeur (R1,R2,R3) réserve et/ou alloue des ressources de routeur pré-réservées et/ou pré-allouées en fonction du signal (RESV*°-message, RESV*°'-message) transmis à partir du récepteur (client).

19. Procédé de la revendication 17 ou 18, dans lequel :
- des ressources de réseau pré-réservées et/ou pré-allouées excédant la demande de réservation et/ou d'allocation du récepteur (client) sont libérées.

20. Procédé selon la revendication 19, tant qu'elle dépend d'une des revendications 4 à 18, dans lequel :
- au moins un routeur (R1,R2,R3) libère ses ressources pré-réservées et/ou pré-allouées en fonction de la demande de réservation et/ou d'allocation dans le signal (RESV*°-message, RESV*°'-message) transmis à partir du récepteur (client).

21. Procédé selon une des revendications 15 à 20, dans lequel :
- le récepteur (client) inclut des informations dans le signal de récepteur étendu (RESV*-message), les informations indiquant un maximum ou un minimum des ressources pré-réservées et/ou pré-allouées qui restent réservées et/ou allouées.

22. Procédé de la revendication 21, dans lequel :
- des ressources de réseau pré-réservées et/ou pré-allouées restent réservées et/ou allouées en fonction des informations incluses dans le signal de récepteur étendu (RESV*-message) indiquant le maximum ou le minimum de ressources de réseau qui restent réservées et/ou allouées.

23. Procédé selon la revendication 22, tant qu'elle dépend d'une des revendications 4 à 21, dans lequel :
- au moins un routeur (R1,R2,R3) maintient ses ressources pré-réservées et/ou pré-allouées en fonction de l'information de récepteur indiquant le maximum ou le minimum de ressources de réseau qui restent réservées et/ou allouées.

24. Procédé selon une des revendications précédentes, dans lequel :
- les signaux (PATH-message, PATH'-message, RESV-message, RESV*-message, RESV*'-message, PATH°*-message, RESV*°-message, RESV*°'-message) incluent des informations indiquant si une réservation et/ou allocation de ressources est effectuée pour un message transmis à l'émetteur (serveur).

25. Procédé selon une des revendications 2 à 24, dans lequel :
- les signaux (PATH-message, PATH'-message, RESV-message, RESV*-message, RESV*'-message, PATH°*-message, RESV*°-message, RESV*°'-message) incluent des informations indiquant si une réservation et/ou allocation de ressources est effectuée pour un message transmis dans une direction au récepteur (client).

26. Procédé selon la revendication 24 ou 25, dans lequel :
- les informations incluses dans les signaux transmis comprennent un indicateur spécifiant un minimum de ressources de réseau requises.

27. Procédé selon la revendication 26, dans lequel :
- des ressources de réseau pré-réservées et/ou pré-allouées excédant des ressources de réseau spécifiées par l'indicateur sont utilisées pour au moins une demande de ressources de réseau ayant une priorité plus grande.

28. Procédé selon une des revendications précédentes, dans lequel :
- le protocole de message de signalisation donné est le protocole de réservation de ressources, +RSVP+,
- le signal d'émetteur (PATH-message) est le PATH-message du protocole de réservation de ressources, +RSVP+.

29. Procédé selon une des revendications 2 à 28, dans lequel :
- le signal de récepteur (RESV-message) est le RESV-message du protocole de réservation de ressources, +RSVP+.

30. Procédé selon une des revendications précédentes, dans lequel :
- le procédé est utilisé dans un réseau desservant une application à client unique et/ou à clients multiples.

31. Procédé selon la revendication 30, tant qu'elle dépend d'une des revendications 2 à 29, dans lequel :
- les signaux (PATH-message, PATH'-message, PATH°'-message) transmis au(x) client(s) sont transmis en utilisant une transmission en multidiffusion.

32. Procédé selon la revendication 30 ou 31, dans lequel :
- les signaux (RESV-message, RESV*-message, RESV*'-message, PATH°*-message, RESV*°-message, RESV*°'-message) transmis à l'émetteur (serveur) sont transmis en utilisant une transmission en multidiffusion inverse.

33. Procédé selon la revendication 31 ou 32, dans lequel :
- une agrégation d'informations incluses dans les signaux transmis via le réseau est effectuée en ce qui concerne au moins un réseau et/ou des composants de celui-ci.

34. Système de réseau utilisant un protocole de message de signalisation donné pour des réservations et allocations de ressources de réseau, comprenant :
- un émetteur (serveur),
- un récepteur (client), et
- au moins un réseau pour connecter l'émetteur (serveur) et le récepteur (client), dans lequel
- l'émetteur (serveur) est adapté afin de fonctionner de manière à :
- générer un signal d'émetteur (PATH-message) selon le protocole donné incluant des informations sur les caractéristiques de trafic d'émetteur de l'émetteur (serveur),
- transmettre le signal d'émetteur (PATH-message) via au moins un réseau, **caractérisé en ce que** l'émetteur est adapté pour :
- inclure des informations sur les caractéristiques de trafic de réseau dans le signal d'émetteur (PATH-message) alors qu'il est transmis afin d'obtenir un signal d'émetteur étendu (PATH'-message), les informations sur les caractéristiques de trafic de réseau indiquant des caractéristiques de trafic du réseau, et
- réserver et/ou allouer des ressources du réseau en fonction des informations sur les caractéristiques de trafic de réseau.

35. Système de réseau selon la revendication 34, dans lequel :
- l'émetteur (serveur) est adapté afin d'être mis en fonctionnement par le procédé selon une des revendications 2 à 33.

36. Système de réseau selon la revendication 34 ou 35, dans lequel le récepteur (client) est adapté afin de fonctionner de manière à :
- recevoir le signal d'émetteur étendu (PATH'-message)
- générer un signal de récepteur (RESV-message) selon le protocole donné incluant des informations sur les caractéristiques de trafic de récepteur indiquant des caractéristiques de trafic du récepteur (client)
- inclure les informations sur les caractéristiques de trafic de réseau dans le signal de récepteur (RESV-message) afin d'obtenir un signal de récepteur étendu (RESV*-message), et
- réserver et/ou allouer des ressources du réseau en fonction des informations sur les caractéristiques de trafic de réseau et des informations sur les caractéristiques de trafic du récepteur.

37. Système de réseau selon la revendication 36, dans lequel :
- le récepteur (client) est adapté afin d'être mis en fonctionnement par le procédé selon une des revendications 3 à 33.

38. Système de réseau selon une des revendications 34 à 37, comprenant :
- au moins un routeur (R1,R2,R3) d'au moins un réseau, au moins un routeur (R1,R2,R3) étant adapté pour fonctionner de manière à :
- transmettre le signal d'émetteur étendu (PATH'-message) via au moins un réseau, et
- inclure et/ou mettre à jour les informations sur les caractéristiques des trafics de réseau en incluant et/ou mettant à jour des informations indiquant des caractéristiques de trafic d'au moins un routeur (R1,R2,R3).

39. Système de réseau selon la revendication 38, dans lequel :
- au moins un routeur (R1,R2,R3) est adapté afin d'être mis en fonctionnement par le procédé selon une des revendications 5 à 33.

40. Système de réseau selon une des revendications 34 à 39, dans lequel :
- le protocole de message de signalisation donné est le protocole de réservation de ressources, +RSVP+.
